**Europäisches Patentamt**

**European Patent Office**

**Office européen des brevets**

(19)

(11) Veröffentlichungsnummer: **0 099 492**
**B1**

# EUROPÄISCHE PATENTSCHRIFT

(12)

(45) Veröffentlichungstag der Patentschrift:
**14.05.86**

(21) Anmeldenummer: **83106276.5**

(22) Anmeldetag: **28.06.83**

(51) Int. Cl.⁴: **H 01 M 10/42, H 01 M 10/39**

(54) **Elektrochemische Speicherzelle.**

(30) Priorität: **10.07.82 DE 3225861**

(43) Veröffentlichungstag der Anmeldung:
**01.02.84 Patentblatt 84/5**

(45) Bekanntmachung des Hinweises auf die Patenterteilung:
**14.05.86 Patentblatt 86/20**

(84) Benannte Vertragsstaaten:
**BE FR GB IT NL**

(56) Entgegenhaltungen:
**DE - A - 2 819 027**
**GB - A - 1 530 273**
**US - A - 4 246 325**
**US - A - 4 247 605**

(73) Patentinhaber: **BROWN, BOVERI & CIE**
**Aktiengesellschaft, Kallstadter Strasse 1,**
**D-6800 Mannheim 31 (DE)**

(72) Erfinder: **Lindner, Bernd, Bahnhofstrasse 28,**
**D-8822 Wassertrüdingen b. Ansbach (DE)**
Erfinder: **Repenning, Detlev, Dr. Dipl.-Chem.,**
**Krabbenkamp 28, D-2057 Rheinbek (DE)**

(74) Vertreter: **Kempe, Wolfgang, Dr. et al, c/o Brown, Boveri**
**& Cie AG Postfach 351, D-6800 Mannheim 1 (DE)**

**Beschreibung**

Die Erfindung bezieht sich auf eine elektrochemische Speicherzelle gemäss dem Oberbegriff des Patentanspruches 1.

Solche wiederaufladbaren elektrochemischen Speicherzellen werden in Hochtemperatur-Speicherbatterien verwendet, die beispielsweise als Energiequelle von Elektrofahrzeugen eine Anwendung finden.

Wiederaufladbare elektrochemische Speicherzellen mit Festelektrolyten eignen sich sehr gut zum Aufbau von Akkumulatoren hoher Energie und Leistungsdichte. Die in den Alkali/Chalkogen-Speicherzellen verwendeten Festelektrolyten, die beispielsweise aus Beta-Aluminiumoxid gefertigt sind, zeichnen sich dadurch aus, dass die Teilleitfähigkeit des beweglichen Ions sehr hoch und die Teilleitfähigkeit der Elektronen um vielfach Zehnerpotenzen kleiner ist. Durch die Verwendung solcher Festelektrolyten für den Aufbau von elektrochemischen Speicherzellen wird erreicht, dass praktisch keine Nebenentladung stattfindet, da die Elektronenleitfähigkeit vernachlässigbar ist, und die Reaktionssubstanzen auch nicht als neutrale Teilchen durch den Festelektrolyten gelangen können.

Ein spezielles Beispiel hierfür sind wiederaufladbare elektrochemische Speicherzellen auf der Basis von Natrium und Schwefel, die einen Festelektrolyten aus Beta-Aluminiumoxid besitzen. Ein Vorteil dieser elektrochemischen Speicherzellen besteht darin, dass beim Laden keine elektrochemischen Nebenreaktionen auftreten. Der Grund dafür ist, dass nur Natriumionen durch den Festelektrolyten gelangen können. Die Stromausbeute einer solchen Natrium/Schwefel-Speicherzelle liegt daher etwa bei 100%. Bei diesen elektrochemischen Speicherzellen ist das Verhältnis von Energieinhalt zum Gesamtgewicht einer solchen Speicherzelle im Vergleich zum Bleiakkumulator sehr hoch, da die Reaktionsstoffe leicht sind und bei der elektrochemischen Reaktion viel Energie frei wird. Elektrochemische Speicherzellen auf der Basis von Natrium und Schwefel besitzen also gegenüber konventionellen Akkumulatoren, wie den Bleiakkumulatoren, erhebliche Vorteile.

Wird an diese Speicherzellen eine zu hohe Spannung angelegt, so kann es zu einem Bruch des Festelektrolyten kommen. Das Gleiche kann auch bei einer Überalterung oder einer mechanischen Beschädigung des Festelektrolyten auftreten. Um in einem solchen Fall das Zusammenfliessen und das direkte Reagieren von grösseren Mengen an Natrium und Schwefel zu vermeiden, ist in der US-PS 4 247 605 vorgeschlagen, im Anodenraum einen Sicherheitseinsatz vorzusehen, der das Alkalimetall aufnehmen kann. Dieser Sicherheitseinsatz weist an seinem unteren Ende eine kleine Austrittsöffnung auf, über welche das Natrium in einen Sicherheitsspalt zwischen dem Sicherheitseinsatz und dem Festelektrolyten eintreten kann.

Von Nachteil ist bei dieser Anordnung, dass bei einem Bruch des Festelektrolyten zwar keine grossen Mengen jedoch immer und kontinuierlich kleinere Mengen an Natrium in den Kathodenraum fliessen können.

Der Erfindung liegt deshalb die Aufgabe zugrunde, eine elektrochemische Speicherzelle zu schaffen, bei der, bei einer Erhöhung der Temperatur über die Arbeitstemperatur der Speicherzelle hinaus, der Austritt des Natriums aus dem Sicherheitseinsatz vollständig unterbunden wird.

Diese Aufgabe wird durch die Merkmale des Patentanspruches 1 gelöst.

Weitere Ausgestaltungen der Erfindung sind in den abhängigen Ansprüchen angegeben.

Das in der Nähe der Austrittsöffnung des Sicherheitseinsatzes angeordnete Bauelement beginnt bei einer Temperatur von 451°C zu schmelzen. Dieser Schmelzpunkt kann dadurch eingehalten werden, dass die Legierung, aus welcher das Bauelement gefertigt ist, 65 Gew.-% Aluminium und 35 Gew.-% Magnesium enthält. Die Gewichtsangabe bezieht sich auf das Gesamtgewicht der Legierung. Wird für die Herstellung des Bauelementes eine Legierung verwendet, die 30,7 Gew.-% Kupfer und 69,3 Gew.-% Magnesium enthält, wobei sich die Gewichtsangabe wiederum auf das Gesamtgewicht der Legierung bezieht, so wird erreicht, dass das Bauelement bei einer Temperatur von 485°C zu schmelzen beginnt. Diese Legierungen besitzen jedoch nicht nur die Eigenschaft, dass sie bei den oben angegebenen Temperaturen zu schmelzen beginnen, vielmehr weisen sie weitere Vorteile gegenüber dem Natrium und den übrigen Bauteilen der Speicherzellen auf. Die Legierungen, insbesondere das aus ihnen gefertigte Bauelement, lässt sich durch das Natrium in dem Sicherheitsbehälter nicht lösen. Durch Aluminium in fester Form wird der Schmelzpunkt der Legierungen nicht verändert. Die Legierungen sind ferner so gewählt, dass sie den aus Aluminium gefertigten Sicherheitseinsatz nicht anlösen, so dass es zu keinem Lochfrass in den Wandungen des Sicherheitseinsatzes kommen kann.

Erfindungsgemäss ist innerhalb der Austrittsöffnung des Sicherheitseinsatzes ein Docht aus Aluminium angeordnet. Kommt es zu einer Temperaturerhöhung innerhalb der Speicherzelle auf einen Wert, der bei 451°C liegt, so beginnt das Bauelement zu schmelzen, und die flüssige Legierung läuft in die Austrittsöffnung des Sicherheitseinsatzes. Sie löst den dort befindlichen Aluminiumdocht auf. Dieser bewirkt eine Schmelzpunkterhöhung der flüssigen Legierung. Hierdurch wird erreicht, dass die Legierung bereits innerhalb der Austrittsöffnung erstarrt. Aus Sicherheitsgründen besteht die Möglichkeit, in dem sich direkt an die Austrittsöffnung anschliessenden Bereich des Sicherheitsspaltes zusätzlich ein Aluminiumnetz anzuordnen. Sollte aus nicht vorsehbaren Gründen die flüssige Legierung bis in diesen Bereich gelangen, so wird durch sie das Aluminiumnetz gelöst. Dies bewirkt eine endgültige Erhöhung des Schmelzpunktes, so dass es spätestens in diesem Bereich zu einer Erstarrung der Legierung kommt. Hierdurch wird sichergestellt, dass das Natrium höchstens bis zur äusseren Begrenzung des Sicherheitseinsatzes fliessen kann.

Die Erfindung wird nachfolgend anhand einer Zeichnung erläutert.

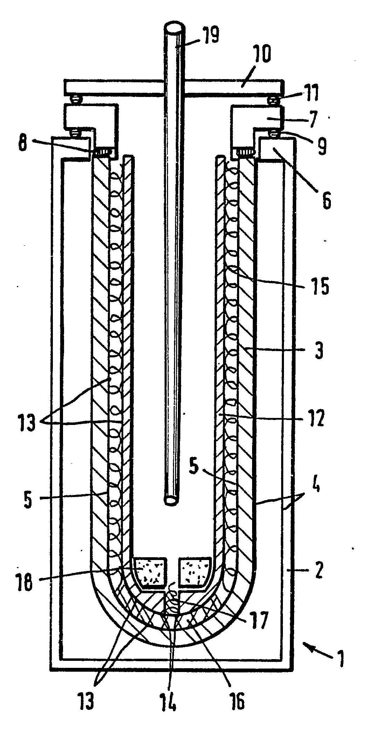

In der Figur ist eine elektrochemische Speicherzelle 1 auf der Basis von Natrium und Schwefel im Vertikalschnitt dargestellt. Die Speicherzelle 1 wird im wesentlichen durch ein metallisches Gehäuse 2 und einen Festelektrolyten 3 gebildet. Das metallische Gehäuse 2 hat die Form eines Bechers. Es ist aus Aluminium oder einem Edelstrahl gefertigt. In seinem Inneren ist der Festelektrolyt 3 angeordnet, der aus Beta-Aluminiumoxid hergestellt ist. Dieser ist ebenfalls becherförmig ausgebildet. Die Abmessungen des Festelektrolyten 3 sind so gewählt, dass zwischen den Innenflächen des metallischen Gehäuses 2 und den Aussenflächen des Festelektrolyten 3 ein zusammenhängender Zwischenraum 4 verbleibt. Dieser wird als Kathodenraum genutzt. Das Innere des Festelektrolyten 3 dient bei der hier dargestellten Ausführungsform der Speicherzelle als Anodenraum 5. Das metallische Gehäuse 2 ist an seinem oberen offenen Ende mit einem nach innen weisenden Flansch 6 versehen. Der Festelektrolyt 3 weist an seinem oberen Ende einen nach aussen gerichteten Flansch 7 auf. Dieser wird durch einen Isolierring aus Alpha-Aluminiumoxid gebildet. Der Isolierring ist über ein Glaslot 8 mit dem Festelektrolyten 3 verbunden. Der Isolierring ist so ausgebildet, dass er die Funktion des nach aussen weisenden Flansches 7 übernehmen kann. Der Flansch 7 ist auf den Flansch 6 des metallischen Gehäuses 2 aufgesetzt. Zwischen den beiden Flanschen 6 und 7 ist eine Dichtung 9 angeordnet. Durch die beiden Flansche 6 und 7 wird der Kathodenraum 4 nach aussen hin verschlossen. Der Verschluss der Speicherzelle 1 erfolgt über eine Verschlussplatte 10, die aus einem nicht leitenden Material hergestellt ist. Die Verschlussplatte 10 verschliesst den Anodenraum 5 und die gesamte Speicherzelle 1 nach aussen hin. Die Verschlussplatte 10 ist auf den Flansch 7 des Festelektrolyten 3 aufgesetzt. Zwischen dem Flansch 7 und der Verschlussplatte 10 ist eine Dichtung 11 angeordnet. Der anodische Stromabnehmer wird hierbei durch einen metallischen Stab 19 gebildet, dessen erstes Ende weit in den Sicherheitseinsatz 12 hineinragt. Sein zweites Ende ist durch eine Bohrung in der Verschlussplatte 10 nach aussen geführt und steht einige Millimeter über diese über. Die Verbindung der Bauteile 6, 7 und 10 der Speicherzelle 1 erfolgt in einer bekannten Art und Weise, die hier nicht näher erläutert werden soll.

In den Festelektrolyten 3 ist ein Sicherheitseinsatz 12 eingesetzt. Dieser hat ebenfalls die Form eines Bechers und ist bei dem hier beschriebenen Ausführungsbeispiel aus Aluminium gefertigt. Für die Herstellung des Sicherheitseinsatzes kann auch ein Edelstahl verwendet werden. Die Abmessungen des Sicherheitseinsatzes 12 sind so gewählt, dass zwischen seinen Aussenflächen und den Innenflächen des Festelektrolyten 3 rundum ein schmaler Sicherheitsspalt 13 verbleibt. An seinem unteren innerhalb des Festelektrolyten 3 angeordneten Ende weist der Sicherheitseinsatz eine schmale Austrittsöffnung 14 auf. Der Sicherheitseinsatz 12 ist für die Aufnahme des flüssigen Natriums vorgesehen. Durch ihn wird verhindert, dass bei einem Bruch des Festelektrolyten 3 grössere Mengen an Natrium in den Kathodenraum 4 fliessen können. Innerhalb des Sicherheitsspaltes 13, der sich zwischen dem Festelektrolyten 3 und dem Sicherheitseinsatz 12 befindet, ist im Bereich der seitlichen Begrenzungsflächen des Festelektrolyten 3 und des Sicherheitseinsatzes 12 eine Metallwolle 15 angeordnet. Diese übernimmt die Aufgabe einer Kapillarstruktur. Mit ihrer Hilfe wird erreicht, dass das aus der Austrittsöffnung 14 des Sicherheitseinsatzes 12 austretende Natrium zu den Innenflächen des Festelektrolyten transportiert wird. Gleichzeitig wird sichergestellt, dass diese Flächen ständig mit Natrium benetzt sind.

Innerhalb des Sicherheitsspaltes 13, der sich direkt an die Austrittsöffnung 14 des Sicherheitseinsatzes 12 anschliesst, ist bei dem hier dargestellten Ausführungsbeispiel ein Metallnetz 16 aus Aluminium angeordnet. In der Austrittsöffnung 14 des Sicherheitseinsatzes 12 ist ein Docht 17 aus Aluminium eingelegt. Im Inneren des Sicherheitseinsatzes 12 ist im Bereich der Austrittsöffnung 14 ein ringförmiges Bauelement 18 so angeordnet, dass die Austrittsöffnung 14 frei bleibt. Das Bauelement 18 hat die Aufgabe, die Austrittsöffnung 14 bei einem Temperaturanstieg der Speicherzelle 1, auf Werte, die wesentlich über der Arbeitstemperatur der Speicherzelle liegen, zu verschliessen. Erfindungsgemäss ist dieses Bauelement 18 aus einer Legierung gefertigt, die wenigstens zwei Metalle aus der Gruppe I-b, II-a und III-a des Periodensystems enthält. Die Zusammensetzung der Legierung ist davon abhängig, bei welcher Temperatur das Bauelement 18 zu schmelzen beginnen soll. Ist beispielsweise beabsichtigt, dass bei einem Temperaturanstieg innerhalb der Speicherzelle 1 auf Werte, die bei etwa 455°C liegen, der Natriumfluss aus dem Sicherheitseinsatz 12 vollständig unterbunden werden soll, so wird vorzugsweise eine Legierung verwendet, die 65 Gew.-% Aluminium und 35 Gew.-% Magnesium enthält. Ist das Bauelement 18 aus dieser Legierung gefertigt, so wird bewirkt, dass das Bauelement 18 beim Erreichen einer Innentemperatur von 451°C zu schmelzen beginnt. Die flüssige Legierung fliesst aus dem Innenbereich des Sicherheitseinsatzes 12 in die Austrittsöffnung 14 hinein. Der dort eingelegte Docht 17 aus Aluminium wird durch diese flüssige Legierung gelöst. Das gelöste Aluminium bewirkt eine Erhöhung des Schmelzpunktes der Legierung. Dadurch wird erreicht, dass die Legierung bereits innerhalb der Austrittsöffnung 14 erstarrt. Sollte die durch den Docht 17 gelieferte Aluminiummenge nicht ausreichen, um den Schmelzpunkt der Legierung zu erhöhen, so ist ein zusätzlicher Sicherheitsfaktor vorgesehen, und zwar das Aluminiumnetz 16, das innerhalb des Sicherheitsspaltes 13 direkt im Anschluss an die Austrittsöffnung 14 angeordnet ist. Für den Fall, dass die Legierung innerhalb der Austrittsöffnung 14 nicht erstarren sollte, wird durch das Aluminiumnetz 16, das durch die flüssige Legierung ebenfalls gelöst werden kann, erreicht, dass die Legierung spätestens in dem direkt sich an die Austrittsöffnung 14 anschliessenden Bereich des Sicherheitsspaltes 13 erstarrt. Die Grösse des Bauelementes 18 ist so bemessen, dass die Austrittsöffnung 14 vollständig durch einen sich bildenden Stopfen der erstarrenden Legierung verschliessbar ist.

Anstelle einer Legierung mit 65 Gew.-% Aluminium und 35 Gew.-% Magnesium kann für die Herstellung des Bauelementes 18 auch eine Legierung aus 30,7 Gew.-% Kupfer und 69,3 Gew.-% Magnesium verwendet werden. Die Gewichtsangabe bezieht sich auf das Gesamtgewicht der Legierung. Ein Bauelement 18 aus dieser Legierung wird jedoch erst bei 485°C zu schmelzen beginnen. Das Bauelement kann gegebenenfalls auch aus einer Legierung gefertigt werden, die 50 Gew.-% Aluminium und 50 Gew.-% Magnesium enthält.

## Patentansprüche

1. Elektrochemische Speicherzelle (1) auf der Basis von Alkalimetall und Schwefel mit einem Anodenraum (5) und einem Kathodenraum (4), die durch einen alkaliionenleitenden Festelektrolyten (3) voneinander getrennt und wenigstens bereichsweise von einem metallischen Gehäuse (2) begrenzt sind, wobei im Anodenraum (5) ein das Alkalimetall aufnehmender Sicherheitseinsatz (12) vorgesehen ist, aus dem das Alkalimetall über mindestens eine Austrittsöffnung (14) in einen Sicherheitsspalt (13) austreten kann, dadurch gekennzeichnet, dass für den Verschluss der Austrittsöffnung (14) innerhalb des Sicherheitseinsatzes (12) ein schmelzbares Bauelement (18) aus einer Legierung angeordnet ist, die wenigstens zwei Metalle aus den Gruppen I-b, II-a und/oder III-a des Periodensystems enthält, und dass mindestens in der Austrittsöffnung (14) ein den Schmelzpunkt der Legierung erhöhender Werkstoff angeordnet ist.

2. Elektrochemische Speicherzelle nach Anspruch 1, dadurch gekennzeichnet, dass das schmelzbare Bauelement (18) als ringförmige Tablette ausgebildet und innerhalb des Sicherheitseinsatzes (12) so angeordnet ist, dass die Austrittsöffnung (14) frei bleibt.

3. Elektrochemische Speicherzelle nach einem der Ansprüche 1 oder 2, dadurch gekennzeichnet, dass das schmelzbare Bauelement (18) aus einer Legierung hergestellt ist, die 65 Gew.-% Aluminium und 35 Gew.-% Magnesium bezogen auf das Gesamtgewicht der Legierung enthält.

4. Elektrochemische Speicherzelle nach einem der Ansprüche 1 bis 2, dadurch gekennzeichnet, dass das schmelzbare Bauelement (18) aus einer Legierung hergestellt ist, die 50 Gew.-% Aluminium und 50 Gew.-% Magnesium bezogen auf das Gesamtgewicht der Legierung enthält.

5. Elektrochemische Speicherzelle nach einem der Ansprüche 1 bis 2, dadurch gekennzeichnet, dass das schmelzbare Bauelement (18) aus einer Legierung hergestellt ist, die 30,7 Gew.-% Kupfer und 69,3 Gew.-% Magnesium bezogen auf das Gesamtgewicht der Legierung enthält.

6. Elektrochemische Speicherzelle nach einem der Ansprüche 1 bis 5, dadurch gekennzeichnet, dass in der Austrittsöffnung (14) des Sicherheitseinsatzes (12) ein Docht (17) aus Aluminium angeordnet ist.

7. Elektrochemische Speicherzelle nach einem der Ansprüche 1 bis 6, dadurch gekennzeichnet, dass in dem Bereich des Sicherheitsspaltes (13), der direkt an die Austrittsöffnung (14) des Sicherheitseinsatzes (12) angrenzt, wenigstens ein Metallnetz (16) aus Aluminium angeordnet ist.

## Claims

1. Electrochemical storage cell (1) based on alkali metal and sulphur with an anode space (5) and a cathode space (4) which are separated from each other by a solid electrolyte (3) which conducts alkali-metal ions, and are bounded at least regionally by a metallic housing (2), the anode space (5) being provided with an alkali-metal absorbing safety insert (12) from which the alkali metal can emerge via at least one exit aperture (14) into a safety gap (13), characterized in that for sealing the exit aperture (14) there is disposed inside the safety insert (12) a fusible component (18) of an alloy which contains at least two metals from the groups Ib, IIa and/or IIIa of the periodic system, and in that at least in the exit aperture (14) there is disposed a material which raises the melting point of the alloy.

2. Electrochemical storage cell according to Claim 1, characterized in that the fusible component (18) is constructed as an annular tablet and is disposed inside the safety insert (12) so that the exit aperture (14) remains free.

3. Electrochemical storage cell according to one of the Claims 1 or 2, characterized in that the fusible component (18) is manufactured from an alloy which contains 65% by weight of aluminium and 35% by weight of magnesium referred to the total weight of the alloy.

4. Electrochemical storage cell according to one of the Claims 1 to 2, characterized in that the fusible component (18) is manufactured from an alloy which contains 50% by weight of aluminium and 50% by weight of magnesium referred to the total weight of the alloy.

5. Electrochemical storage cell according to one of the Claims 1 to 2, characterized in that the fusible component (18) is manufactured from an alloy which contains 30.7% by weight of copper and 69.3% by weight of magnesium referred to the total weight of the alloy.

6. Electrochemical storage cell according to one of the Claims 1 to 5, characterized in that a wick (17) of aluminium is disposed in the exit aperture (14) of the safety insert (12).

7. Electrochemical storage cell according to one of the Claims 1 to 6, characterized in that in the region of the safety gap (13), which directly borders on the exit aperture (14) of the safety insert (12), there is disposed at least one metal gauze (16) of aluminium.

## Revendications

1. Elément (1) d'accumulateur électrochimique à base de métal alcalin et de soufre, avec un compartiment anodique (5) et un compartiment cathodique (4) qui sont séparés l'un de l'autre par un électrolyte solide (3) conduisant les ions alcalins et qui sont délimités au moins partiellement par un boîtier métallique (2), une enveloppe de sécurité (12) recevant le métal alcalin étant prévue dans le compartiment anodique (5), le métal alcalin pouvant sortir de cette enveloppe dans une fente de sécurité (13) par au moins un orifice de sortie (14), caractérisé par le fait qu'afin d'obturer l'orifice de sortie (14), on a disposé à l'intérieur de l'enveloppe de sécurité (12) un élément fusible (18) réalisé en un alliage contenant au moins deux métaux des groupes I-b, II-a et/ou III-a de la classification périodique, et qu'un matériau (17) augmentant le point de fusion de l'alliage et disposé au moins dans l'orifice de sortie (14).

2. Elément d'accumulateur électrochimique selon la revendication 1, caractérisé par le fait que l'élément fusible (18) est réalisé sous la forme d'une tablette annulaire et est disposé à l'intérieur de l'enveloppe de sécurité (12) de façon à laisser l'orifice de sortie (14) dégagé.

3. Elément d'accumulateur électrochimique selon la revendication 1 ou 2, caractérisé par le fait que l'élément fusible (18) est réalisé en un alliage contenant 65% d'aluminium et 35% de magnésium, en pourcentages de poids par rapport au poids total de l'alliage.

4. Elément d'accumulateur électrochimique selon la revendication 1 ou 2, caractérisé par le fait que l'élément fusible (18) est réalisé en un alliage contenant 50% d'aluminium et 50% de magnésium, en pourcentages de poids par rapport au poids total de l'alliage.

5. Elément d'accumulateur électrochimique selon la revendication 1 ou 2, caractérisé par le fait que l'élément fusible (18) est réalisé en un alliage contenant 30,7% de cuivre et 69,3% de magnésium, en pourcentages en poids par rapport au poids total de l'alliage.

6. Elément d'accumulateur électrochimique selon une des revendications 1 à 5, caractérisé par le fait qu'une mèche (17) en aluminium est disposée dans orifice de sortie (14) de l'enveloppe de sécurité (12).

7. Elément d'accumulateur électrochimique selon une des revendications 1 à 6, caractérisé par le fait qu'au moins un treillis métallique (16) en aluminium est disposé dans la zone de la fente de sécurité (13) qui est directement adjacente à l'orifice de sortie (14) de l'enveloppe de sécurité (12).